# EUROPÄISCHE PATENTSCHRIFT

(11) **EP 2 744 624 B1**
(45) Veröffentlichungstag und Bekanntmachung des Hinweises auf die Patenterteilung: **07.10.2015**
(21) Anmeldenummer: 12759351.5
(22) Anmeldetag: 14.08.2012
(51) Int. Cl.: B25B 5/12, B25B 5/16, F16F 9/14

(54) **BETÄTIGUNGSVORRICHTUNG**
ACTUATING DEVICE
DISPOSITIF D'ACTIONNEMENT

(30) Priorität: 15.08.2011 DE 102011110129
(43) Veröffentlichungstag der Anmeldung: 25.06.2014
(73) Patentinhaber: DE-STA-CO Europe GmbH, 61440 Oberursel (DE)
(72) Erfinder: SCHUH, Bernhard, 90431 Nuernberg (DE)
(74) Vertreter: Wolf, Michael
(86) Internationale Anmeldenummer: PCT/DE2012/100239
(87) Internationale Veröffentlichungsnummer: WO 2013/023650

(56) Entgegenhaltungen:
- EP-A2- 1 952 946
- WO-A1-2011/058586
- DE-B3-102005 049 647
- DE-T2- 60 203 577
- US-A- 1 873 100
- US-A1- 2002 063 371

## Beschreibung

Die Erfindung betrifft eine Betätigungsvorrichtung gemäß dem Oberbegriff des Patentanspruchs 1. Eine solche Betätigungsvorrichtung ist beispielsweise aus der US 2002/0 063 371 bekannt.

Eine andere Betätigungsvorrichtung der eingangs genannten Art ist nach der DE 602 03 577 T2 bekannt. Diese besteht aus einem linearbeweglich ausgebildeten, fluidsch (insbesondere pneumatisch, gegebenenfalls aber auch hydraulisch) betriebenen Kolbenantrieb und einer drehbeweglich in einem Gehäuse gelagerten Schwenkwelle für einen verdrehfest mit der Schwenkwelle verbundenen Hebelarm, wobei zur Verbindung des Kolbenantriebs mit der Schwenkwelle eine Stellmechanik und zur Bewegungsdämpfung des Hebelarms eine Dämpfungseinrichtung vorgesehen ist. Die Dämpfungseinrichtung ist bei dieser Lösung am hebelarmabgewandten Ende des Kolbenantriebs in einem separaten Gehäuse angeordnet. Sie besteht insbesondere aus einer separaten Kolbenkonstruktion, die mit der Kolbenstange des Kolbenantriebs über eine Drehspindel verbunden ist. Diese Konstruktion erfordert zur Realisierung der Bewegungsdämpfung viele Zusatzbauteil und ist außerdem platzaufwändig.

Der Erfindung liegt die Aufgabe zugrunde, eine Betätigungsvorrichtung der eingangs genannten Art zu verbessern. Insbesondere soll mit der Erfindung eine konstruktiv einfachere und kompaktere Betätigungsvorrichtung geschaffen werden.

Diese Aufgabe ist mit einer Betätigungsvorrichtung der eingangs genannten Art durch die im Kennzeichen des Patentanspruchs 1 genannten Merkmale gelöst.

Nach einer Ausführungsform ist die Dämpfungseinrichtung einerseits mit dem Gebäuse und andererseits mit der Schwenkwelle verbunden ausgebildet.

Mit anderen Worten ist vorgesehen, die Dämpfungseinrichtung nunmehr direkt an der Schwenkwelle und nicht mehr am hebelarmabgewandten Ende des Kolbenantriebs anzuordnen.

Die Maßgabe, dass die Dämpfungseinrichtung einerseits mit dem Gehäuse und andererseits mit der Schwenkwelle verbunden ist, stellt klar bzw. verdeutlicht, dass das Gehäuse als Widerlager für eine von der Schwenkwelle auf die Dämpfungseinrichtung ausgeübte Kraft dient bzw. vorgesehen ist.

Da sich die Dämpfungseinrichtung direkt an der Schwenkwelle befindet, ist die Betätigungsvorrichtung insgesamt kompakt.

Ein weiterer Vorteil besteht darin, dass die an der Schwenkwelle angeordnete Dämpfungseinrichtung auch dann noch funktioniert, wenn wahlweise der Kolbenantrieb und/oder die Stellmechanik (zum Beispiel durch Bruch) versagt.

Andere vorteilhafte Weiterbildungen ergeben sich aus den abhängigen Patentansprüchen.

Die erfindungsgemäße Betätigungsvorrichtung einschließlich ihrer vorteilhaften Weiterbildungen gemäß der abhängigen Patentansprüche wird nachfolgend anhand der zeichnerischen Darstellung zweier Ausführungsbeispiele näher erläutert.

Es zeigt schematisch
- Figur 1: teilweise im Schnitt eine erste Ausführungsform der erfindungsgemäßen Betätigungsvorrichtung mit einer Dämpfungseinrichtung an der Schwenkwelle des Hebelarms; und
- Figur 2: im Parallelschnitt zur Schwenkwelle eine zweite Ausführungsform der erfindungsgemäßen Betätigungsvorrichtung mit Vertiefung und Abdeckung.

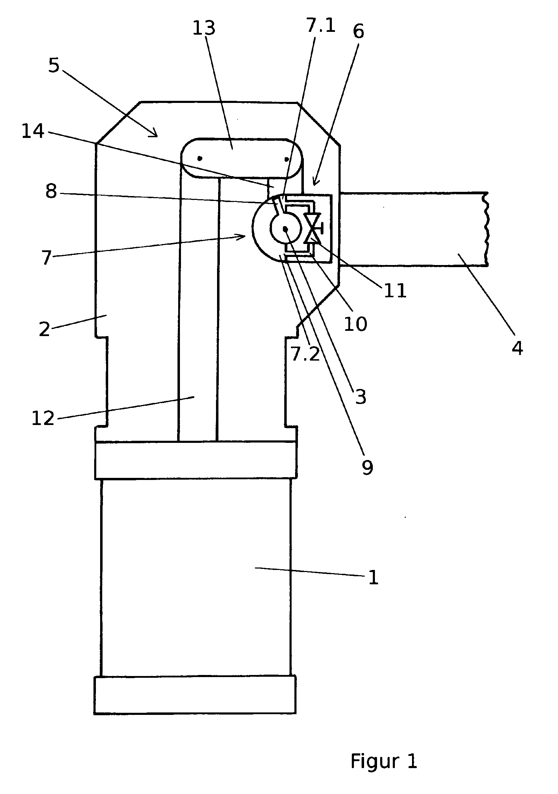

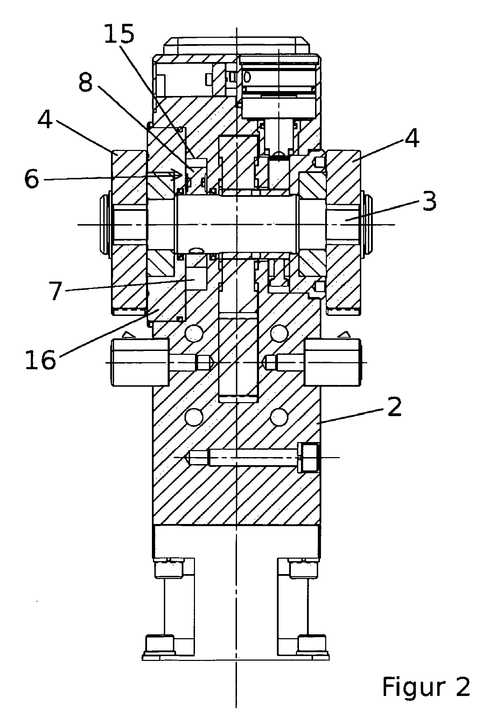

Die in den Figuren 1 und 2 schematisch dargestellte Betätigungsvorrichtung (insbesondere Spann- bzw. Schwenkvorrichtung) besteht zunächst aus einem linearbeweglich ausgebildeten, fluidsch betriebenen Kolbenantrieb 1, insbesondere einem Pneumatikantrieb. Außerdem besteht die Vorrichtung aus einer drehbeweglich in einem Gehäuse 2 gelagerten Schwenkwelle 3 für einen verdrehfest mit der Schwenkwelle 3 verbundenen Hebelarm 4, wobei zur Verbindung des Kolbenantriebs 1 mit der Schwenkwelle 3 eine Stellmechanik 5 und zur Bewegungsdämpfung des Hebelarms 4 eine Dämpfungseinrichtung 6 vorgesehen ist. Die Stellmechanik 5, die vorzugsweise als Kniehebelmechanik ausgebildet ist, ist im Gehäuse 2 angeordnet. Der Kolbenantrieb 1 weist eine Kolbenstange 12 auf. Diese Kolbenstange 12 bildet einen Teil der Stellmechanik 5. Der Kolbenantrieb 1 ist am Gehäuse 2 angeordnet. Außerdem ist das Gehäuse 2 in an sich bekannter Weise aus zwei Halbschalen gebildet, wobei die Schwenkwelle 3 senkrecht zu einer Teilungsebene der beiden Halbschalen und die Stellmechanik 5 zwischen den beiden Halbschalen angeordnet ist. Weiterhin weist jede Halbschale eine Durchgangsöffnung (Lager) für die Schwenkwelle 3 auf.

Wesentlich für die erfindungsgemäße Betätigungsvorrichtung ist nun, dass die Dämpfungseinrichtung 6 einerseits mit dem Gehäuse 2 und andererseits mit der Schwenkwelle 3 verbunden ausgebildet ist. Diese Maßgabe hat im Unterschied zum vorbekannten Stand der Technik den Vorteil, dass die Betätigungsvorrichtung trotz der Dämpfungseinrichtung 6 kompakt ausgebildet ist.

Um den baulichen Aufwand zur Realisierung der Dämpfungseinrichtung 6 gering zu halten, ist vorgesehen, dass die Dämpfungseinrichtung 6 eine Kammer 7 umfasst, in der ein Kolben 8 beweglich gelagert ist. Dieser Kolben 8 ist verdrehfest mit der Schwenkwelle 3 verbunden. Die Kammer 7 ist besonders bevorzugt im Querschnitt als Kreissektor eines Kreisringes ausgebildet, wobei der Mittelpunkt des Kreissektors mit der Drehachse der Schwenkwelle 3 zusammenfallend und der Kolben 8 um den Mittelpunkt des Kreissektors verschwenkbar ausgebildet ist.

Die Maßgabe "Kreissektor eines Kreisringes" bedeutet dabei, dass die Kammer 7 im Querschnitt letztlich wie ein Kuchenstück mit fehlender Spitze aussieht. In Figur 1 entspricht dabei das Kuchenstück einem halben Kuchen, wobei die Spitze halbkreisförmig ausgenommen ist. Damit die Betätigungsvorrichtung ordnungsgemäß funktioniert, ist als weitere Maßgabe vorgesehen, dass ein Öffnungswinkel des Kreissektors (also letztlich der Winkel des Kuchenstücks) einem maximalen Schwenkbereich des Hebelarms 4 entspricht.

Weiterhin ist vorgesehen, dass der Kolben 8 die Kammer 7 in zwei Teilkammer 7.1, 7.2 (Teilkuchenstücke) aufteilt. Dabei ist jede Teilkammer 7.1, 7.2 mit einem Druckmittelanschluss 9 für ein flüssiges Druckmittel (zum Beispiel Hydrauliköl) versehen. Die Druckmittelanschlüsse 9 sind miteinander über eine Verbindungsleitung 10 verbunden ausgebildet. Zur Einstellung des Dämpfungsgrades bzw. zur Einstellung einer Druckmitteldurchflussmenge ist die Verbindungsleitung 10 mit einer Drosseleinrichtung 11, deren Durchströmquerschnitt einstellbar ist, versehen.

Wie weiterhin aus Figur 1 und 2 erkennbar, ist die Dämpfungseinrichtung 6 auf einer Außenseite bzw. Außenflanke des Gehäuses 2 und darüber hinaus in einer Vertiefung 15 einer Wandung des Gehäuses 2 angeordnet. Diese Vertiefung 15 ist, wie aus Figur 2 ersichtlich, mit einer Abdeckung 16 versehen.

Die erfindungsgemäße Betätigungsvorrichtung funktioniert wie folgt:
Figur 1 zeigt die Betätigungs- bzw. Spannvorrichtung in Verschlussstellung. Der Kolben des pneumatischen Kolbenantriebs 1 ist nicht extra dargestellt; er befindet sich am oben Ende des Zylinders. Wird die Vorrichtung nun mit Druckluft beaufschlagt, führt dies dazu, dass der Kolben des Kolbenantriebs 1 nach unten gedrückt wird. Dies wiederum hat zur Folge, dass sich auch die Kolbenstange 12 nach unten bewegt. Dabei zieht sie an der Lasche 13 und somit auch an dem Hebel 14, der verdrehfest mit der Schwenkwelle 3 verbunden ist. Diese Art der Stellmechanik ist als Kniehebelmechanik bekannt.

Da weiterhin auch der Kolben 8 der Dämpfungseinrichtung 6 verdrehfest mit der Schwenkwelle 3 verbunden ist, führt die Drehung der Schwenkwelle 3 dazu, dass sich der Kolben 8 gegen den Uhrzeigersinn in der Kammer 7 bewegt. Dabei wird das in der Teilkammer 7.2 befindliche Druckmittel durch die Verbindungsleitung 10 zur Drosseleinrichtung 11 gedrückt. Je nach Öffnungsgrad der Drosseleinrichtung 11 kann das Druckmittel dann mehr oder weniger schnell die Drosseleinrichtung 11 passieren und über die Verbindungsleitung 10 in die Teilkammer 7.1 strömen. Verschließt man die Drosseleinrichtung 11 so führt dies letztlich dazu, dass die Schwenkwelle 3 gegen Verschwenken blockiert ist.

Würde nun zum Beispiel (aus welchen Gründen auch immer) die Kolbenstange 12 brechen, wäre eine weitere ungewollte Bewegung des Hebelarms 4 aufgrund der Dämpfungseinrichtung 6 jedenfalls gedämpft, da sich der Kolben 8 in der Kammer 7 aufgrund der Drosseleinrichtung 11 nicht beliebig schnell bewegen kann. Hieraus ergibt sich, dass es von großem Vorteil ist, die Dämpfungseinrichtung 6 nicht am hinteren Ende des Kolbenantriebs 1, sondern direkt an der Schwenkwelle 3 anzuordnen.

### Bezugszeichenliste

- 1: Kolbenantrieb
- 2: Gehäuse
- 3: Schwenkwelle
- 4: Hebelarm
- 5: Stellmechanik
- 6: Dämpfungseinrichtung
- 7: Kammer
- 7.1: Teilkammer
- 7.2: Teilkammer
- 8: Kolben
- 9: Druckmittelanschluss
- 10: Verbindungsleitung
- 11: Drosseleinrichtung
- 12: Kolbenstange
- 13: Lasche
- 14: Hebel
- 15: Vertiefung
- 16: Abdeckung

## Patentansprüche

1. Betätigungsvorrichtung, umfassend einen linearbeweglich ausgebildeten, fluidisch betriebenen Kolbenantrieb (1) und eine drehbeweglich in einem Gehäuse (2) gelagerte Schwenkwelle (3) für einen verdrehfest mit der Schwenkwelle (3) verbundenen Hebelarm (4), wobei zur Verbindung des Kolbenantriebs (1) mit der Schwenkwelle (3) eine Stellmechanik (5) und zur Bewegungsdämpfung des Hebelarms (4) eine Dämpfungseinrichtung (6) vorgesehen ist, wobei die Dämpfungseinrichtung (6) einerseits mit dem Gehäuse (2) und andererseits mit der Schwenkwelle (3) verbunden ausgebildet ist,
**dadurch gekennzeichnet,**
**dass** die Dämpfungseinrichtung (6) eine Kammer (7) umfasst, in der ein Kolben (8) beweglich gelagert ist.

2. Betätigungsvorrichtung nach Anspruch 1,
**dadurch gekennzeichnet,**
**dass** die Kammer (7) im Querschnitt als Kreissektor eines Kreisringes ausgebildet ist, wobei der Mittelpunkt des Kreissektors mit der Drehachse der Schwenkwelle (3) zusammenfallend ausgebildet ist.

3. Betätigungsvorrichtung nach Anspruch 1 oder 2,
**dadurch gekennzeichnet,**
**dass** der Kolben (8) die Kammer (7) in zwei Teilkammer (7.1, 7.2) aufteilt.

4. Betätigungsvorrichtung nach Anspruch 3,
**dadurch gekennzeichnet,**
**dass** jede Teilkammer (7.1, 7.2) mit einem Druckmittelanschluss (9) versehen ist.

5. Betätigungsvorrichtung nach Anspruch 4,
**dadurch gekennzeichnet,**
**dass** die Druckmittelanschlüsse (9) miteinander über eine Verbindungsleitung (10) verbunden ausgebildet sind.

6. Betätigungsvorrichtung nach Anspruch 5,
**dadurch gekennzeichnet,**
**dass** die Verbindungsleitung (10) zur Einstellung einer Druckmitteldurchflussmenge mit einer Drosseleinrichtung (11) versehen ist.

7. Betätigungsvorrichtung nach einem der Ansprüche 1 bis 6,
**dadurch gekennzeichnet,**
**dass** die Dämpfungseinrichtung (6) auf einer Außenseite des Gehäuses (2) angeordnet ist.

8. Betätigungsvorrichtung nach einem der Ansprüche 1 bis 7,
**dadurch gekennzeichnet,**
**dass** die Dämpfungseinrichtung (6) in einer Vertiefung (15) einer Wandung des Gehäuses (2) angeordnet ist.

9. Betätigungsvorrichtung nach Anspruch 8,
**dadurch gekennzeichnet,**
**dass** die Vertiefung (15) mit einer Abdeckung (16) versehen ist.

## Claims

1. An actuating device comprising a linearly movable, fluidically operated piston drive (1) and a swing shaft (3), which is rotatably supported in a housing (2), for a lever arm (4) that is connected to the swing shaft (3) in a rotationally rigid fashion, wherein a control mechanism (5) is provided for connecting the piston drive (1) to the swing shaft (3) and a damping device (6) is provided for damping the motion of the lever arm (4), and wherein the damping device (6) is connected to the housing (2) on the one hand and to the swing shaft (3) on the other hand,
**characterized in**
**that** the damping device (6) comprises a chamber (7), in which a piston (8) is movably supported.

2. The actuating device according to claim 1,
**characterized in**
**that** the chamber (7) is realized with a cross section in the form of a sector of a circular ring, wherein the center of the sector coincides with the rotational axis of the swing shaft (3).

3. The actuating device according to claim 1 or 2,
**characterized in**
**that** the piston (8) divides the chamber (7) into two partial chambers (7.1, 7.2).

4. The actuating device according to claim 3,
**characterized in**
**that** each partial chamber (7.1, 7.2) is provided with a pressure medium connection (9).

5. The actuating device according to claim 4,
**characterized in**
**that** the pressure medium connections (9) are connected to one another via a connecting line (10).

6. The actuating device according to claim 5,
**characterized in**
**that** the connecting line (10) is provided with a throttle device (11) in order to adjust a pressure medium flow rate.

7. The actuating device according to one of claims 1-6,
**characterized in**
**that** the damping device (6) is arranged on an outer side of the housing (2).

8. The actuating device according to one of claims 1-7,
**characterized in**
**that** the damping device (6) is arranged in a recess (15) of a wall of the housing (2).

9. The actuating device according to claim 8,
**characterized in**
**that** the recess (15) is provided with a cover (16).

## Revendications

1.Dispositif d'actionnement comprenant un entraînement à piston (1) entraîné par fluide, constitué mobile de manière linéaire et un arbre orientable (3) logé mobile en rotation dans un boîtier (2) pour un bras de levier (4) raccordé de manière à résister à la torsion avec l'arbre orientable (3), pour lequel un mécanisme de commande (5) est prévu pour le raccordement de l'entraînement à piston (1) à l'arbre orientable (3) et un dispositif d'amortissement (6) est prévu pour l'amortissement de la course du bras de levier (4), pour lequel le dispositif d'amortissement (6) est constitué raccordé d'une part au boîtier (2) et d'autre part à l'arbre orientable (3),
**caractérisé en ce que**
le dispositif d'amortissement (6) comprend une chambre (7) dans laquelle un piston (8) est logé mobile.

2. Dispositif d'actionnement selon la revendication 1
**caractérisé en ce que**
la chambre (7) est constituée dans la section comme un secteur de cercle d'un anneau circulaire, pour lequel le point central du secteur de cercle est constitué coïncidant avec l'axe de rotation de l'arbre orientable (3).

3. Dispositif d'actionnement selon la revendication 1 ou 2
**caractérisé en ce que**
le piston (8) divise la chambre (7) en deux chambres partielles (7.1, 7.2).

4. Dispositif d'actionnement selon la revendication 3
**caractérisé en ce que**
chaque chambre partielle (7.1, 7.2) est munie d'un raccord de milieu pression (9).

5. Dispositif d'actionnement selon la revendication 4
**caractérisé en ce que**
les raccords de milieu de pression (9) sont constitués raccordés les uns aux autres par un conduit de raccordement (10).

6. Dispositif d'actionnement selon la revendication 5
**caractérisé en ce que**
le conduit de raccordement (10) est équipé d'un dispositif d'étranglement (11) pour régler un débit du milieu de pression.

7. Dispositif d'actionnement selon l'une quelconque des revendications 1 à 6
**caractérisé en ce que**
le dispositif d'amortissement (6) est disposé sur un côté extérieur du boîtier (2).

8. Dispositif d'actionnement selon l'une quelconque des revendications 1 à 7
**caractérisé en ce que**
le dispositif d'amortissement (6) est disposé dans une cavité (15) d'une paroi du boîtier (2).

9. Dispositif d'actionnement selon la revendication 8
**caractérisé en ce que**
la cavité (15) est munie d'une couverture (16).
